# EUROPÄISCHE PATENTSCHRIFT

(11) **EP 1 238 706 B1**
(45) Veröffentlichungstag und Bekanntmachung des Hinweises auf die Patenterteilung: **22.09.2004**
(21) Anmeldenummer: 02100157.3
(22) Anmeldetag: 20.02.2002
(51) Int. Cl.: B01L 9/00, B65H 1/06

(54) **Kassettenstapel mit Kassetten für histologische Untersuchungen**
Cassette-stack with cassettes for histological examinations
Pile de cassettes avec cassettes pour examens histologiques

(30) Priorität: 09.03.2001 DE 20104158 U
(43) Veröffentlichungstag der Anmeldung: 11.09.2002
(73) Patentinhaber: Leica Microsystems Nussloch GmbH, 69226 Nussloch b. Heidelberg (DE)
(72) Erfinder: LAUDAT, Andreas, 74909, Meckesheim (DE)
(74) Vertreter: Reichert, Werner F., Dr.

(56) Entgegenhaltungen:
- GB-A- 2 235 163
- US-A- 4 343 579
- US-A- 5 445 296
- US-A- 5 511 690
- US-A- 6 098 839

## Beschreibung

Die Erfindung betrifft einen Kassettenstapel mit einzelnen, übereinander angeordneten und lösbar miteinander verbundenen Kassetten, gemäß dem Oberbegriff des Anspruchs 1.

Die Kassetten eines derartigen Stapel dienen als Aufnahmebehälter für histologische Proben. Diese werden in dem Behälter zur Schnittpräparation einem nachfolgenden chemischen Prozess zur Fixierung und einem Prozess zur Einbettung ausgesetzt. Zur Unterscheidung der Kassetten werden diese manuell oder auch maschinell beschriftet. Zur Beschriftung der Kassetten ist aus der GB 2 235 163 A ein Drucksystem bekannt. In diesem Drucksystem müssen die Kassetten einzeln in ein Stapelmagazin eingefüllt werden.

Die Kassetten werden im Handel üblicherweise lose in Kunstoffbeuteln verpackt angeboten und müssen dann mühsam "von Hand" in derartige Stapelmagazine eingebracht werden.

In der GB 2 304 704 A ist ein vorkonfektioniertes Stapelmagazin "packing, containing a stack of tissue processing cassettes" für einen speziellen Drucker erwähnt, bei dem ein hoher Verpackungsaufwand betrieben wird.

Ferner wird im Handel ein Kassettenstapel angeboten, bei dem die Kassetten an beiden Längsseiten eine spezielle Nut aufweisen. In den Nuten wird ein Endlosband zur Befestigung der Kassetten untereinander geführt. Durch das Band werden die Kassetten zwar sicher gehalten, jedoch muss jede Kassette mit einer speziellen Nut ausgestattet sein, so dass dies auf eine bestimmten Kassettentyp beschränkt ist. Es hat sich außerdem in der Praxis als schwierig herausgestellt, das Band vom Kassettenstapel zu entfernen.

Es ist daher Aufgabe der vorliegenden Erfindung, die verschiedenen handelsüblichen Kassetten lösbar miteinander zu verbinden, so dass ein sicherer Transport und eine einfache Befüllung von Drucker-Stapelmagazinen möglich wird.

Diese Aufgabe wird erfindungsgemäß durch die kennzeichnenden Merkmale des Anspruchs 1 gelöst. Vorteilhafte Weiterbildungen sind Gegenstand der Unteransprüche.

Die Erfindung zeichnet sich dadurch aus, dass die Verbindung der einzelnen Kunststoff-Kassetten entweder über ein Klebeband, das an einer der Seitenflächen angebracht ist und/oder über eine Schweißnaht auf mindestens einer der Seitenflächen erfolgt. Mit dem Klebeband und/oder der Schweißnaht kann ein sicherer Transport und ein einfaches Befüllen des Stapelmagazins mit dem Kassettenstapel erfolgen. Außerdem sind diese Verbindungen sehr preiswert und umweltschonend herstellbar. Ein weiterer Vorteil liegt darin, dass alle bisherigen Kassetten miteinander verbunden werden können, ohne dass spezielle Nuten o.ä. in den Kassetten vorzusehen sind.

In einer Ausgestaltung der Erfindung sind die Kassetten, die eine rechteckig ausgebildete Grundfläche mit umlaufenden, angeformten Seitenflächen aufweisen im Kassettenstapel in Längsrichtung gegeneinander verschoben angeordnet. Dies hat den Vorteil, dass sich die Ecken der Kassetten nicht gegeneinander verkanten können.

Zu weiteren Erhöhung der Formstabilität des Kassettenstapels sind die Kassetten unter einem Winkel von mindestens 20° zueinander angeordnet. Dies hat auch den Vorteil, dass sich der Stapel leichter in das Stapelmagazin einbringen lässt.

Schräggestellte Kassetten innerhalb des Stapelmagazins lassen sich mechanisch leichter entnehmen und verkanten nicht gegeneinander.

In einer weiteren Ausgestaltung der Erfindung ist mindestens ein Klebeband an mindestens einer der Seitenflächen angeordnet, wobei es selbstverständlich möglich ist, aus Stabilitätsgründen zwei oder mehr Klebebänder an einer Seite oder auch jeweils ein Klebeband an zwei oder mehr Seiten anzuordnen. Diese Klebebänder werden so gewählt, dass sie rückstandsfrei von der Kassette abziehbar sind.

Das Klebeband zeichnet sich auch dadurch aus, dass es an einer beliebigen Stelle durchtrennbar und/oder teilweise vom Kassettenstapel abziehbar ausgebildet ist. Damit lassen sich unterschiedliche Stapelmagazine individuell befüllen.

In einer weiteren Ausgestaltung der Erfindung ist es vorgesehen, die Kassetten über eine Schweißnaht zu verbinden. Diese Schweißnaht wird mit einem beheizbaren Werkzeug, vorzugsweise einem beheizten Draht, hergestellt. Über diesen Draht werden benachbarte Kassetten, die vorzugsweise aus Polyoxymethylen gefertigt sind, an benachbarten Punkten miteinander verschweißt. Diese punktförmige Verbindung ist sehr einfach und kostengünstig herstellbar und benötigt keinerlei zusätzliche Verpackungs- oder Befestigungsmaterialien. Ein weiterer Vorteil liegt in der einfachen Lösung dieser Verbindung. Es kann natürlich auch vorgesehen sein, eine Seite des Kassettenstapels mit einem Klebeband zu fixieren und eine andere Seite zusätzlich mit einer Schweißnaht.

In einer weiteren Ausgestaltung der Erfindung weist das Stapelmagazin des Drucksystems einer Seite einen Schlitz zum Abziehen des Klebebandes vom Kassettenstapel auf. Damit wird erreicht, dass der gesamte Kassettenstapel sicher in das Magazin eingebracht werden kann und erst nach diesem Einbringen das Klebeband über den Schlitz vollständig oder teilweise entfernt wird. Nur so ist ein sicheres Einbringen des Kassettenstapel gewährleistet.

Es ist ferner vorgesehen, die Grundfläche des Stapelmagazins kleiner als die Grundfläche der Kassette auszubilden. Dadurch müssen die Kassetten schräggestellt in das Stapelmagazin eingebracht werden und werden dort in dieser Schrägstellung gestapelt. Dies hat den Vorteil, dass sich die Kassetten mit ihren Ecken nicht gegeneinander verkanten können und so eine sichere mechanische Entnahme der Kassette gewährleistet ist.

Um die Schrägstellung der Kassetten zu gewährleisten ist der Kassettenstapel schräg in das Stapelmagazin einführbar ausgebildet. Es hat sich von Vorteil erwiesen, wenn die Kassetten im Kassettenstapel unter einem Winkel von mindestens 20° und im Stapelmagazin unter einem Winkel von mindestens 15° angeordnet sind.

Die Erfindung wird in mehreren Ausführungsbeispielen anhand der schematischen Zeichnungen dargestellt und näher erläutert. Es zeigen:
- Fig. 1:: Eine Seitenansicht des Kassettenstapels mit angebachtem Klebeband
- Fig. 2:: eine Perspektive des Kassettenstapels mit angebrachtem Klebeband
- Fig. 3:: eine Seitenansicht des Kassettenstapels mit angebachter Schweißnaht
- Fig. 4:: eine Perspektive des Kassettenstapels mit angebrachter Schweißnaht
- Fig. 5:: eine Seitenansicht des Stapelmagazins mit eingebrachtem Kassettenstapel.
- Fig. 6:: das Stapelmagazin in Aufsicht

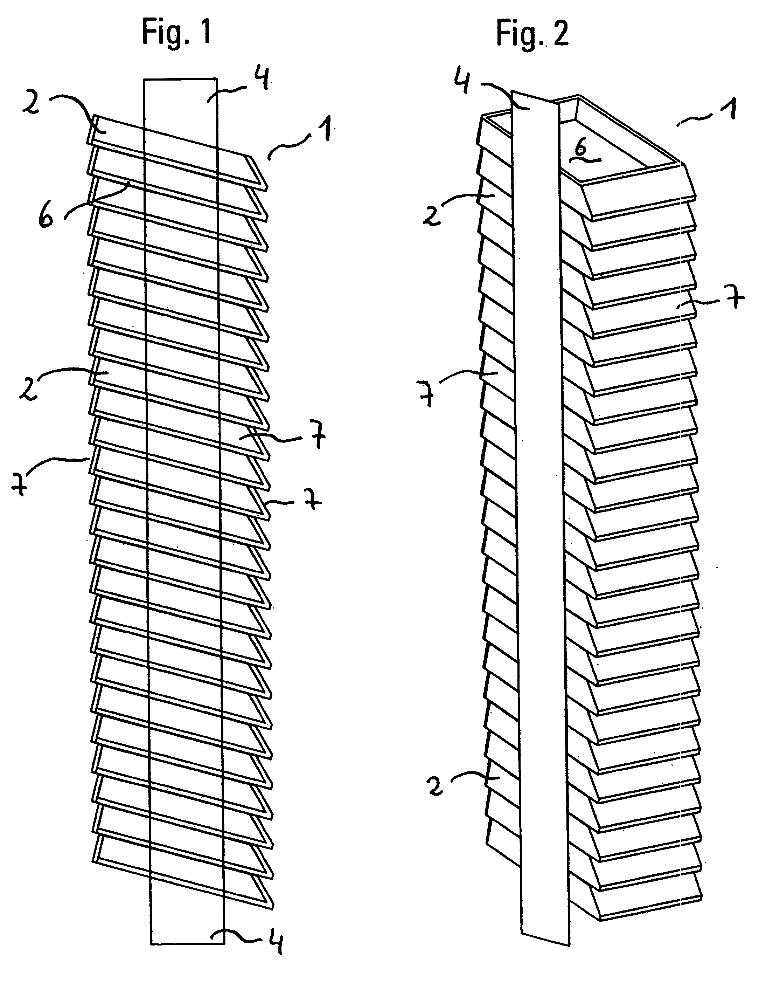

Die Figur 1 zeigt einen Kassettenstapel 1 mit mehreren übereinander angeordneten Kassetten 2. Die Kassetten 2 haben eine rechteckige Grundfläche 6 und sind mit angeformten und umlaufenden Seitenflächen 7 ausgestattet.

Diese Kassetten 2 dienen der Aufnahme von histologischen Präparaten, die zur Schnittpräparation einen chemischen Prozess durchlaufen. Die Kassetten 2 sind in ihrer Längsrichtung gegeneinander verschoben angeordnet. Ferner sind die Kassetten 2 unter einem Winkel von ca. 20° zu ihrer Grundfläche im Kassettenstapel 1 angeordnet. Die einzelnen Kassetten 1 des Stapel sind über ein Klebeband 4 lösbar miteinander verbunden. Dieses Klebeband 4 lässt sich vom Kassettenstapel wieder rückstandsfrei entfernen.

Die Figur 2 zeigt den Kassettenstapel 1 aus der Figur 1 in einer perspektivischen Darstellung mit dem aufgebrachten Klebeband 4. Aus dieser Darstellung wird deutlich, dass die Kassetten 2 geneigt und gegeneinander verschoben angeordnet sind.

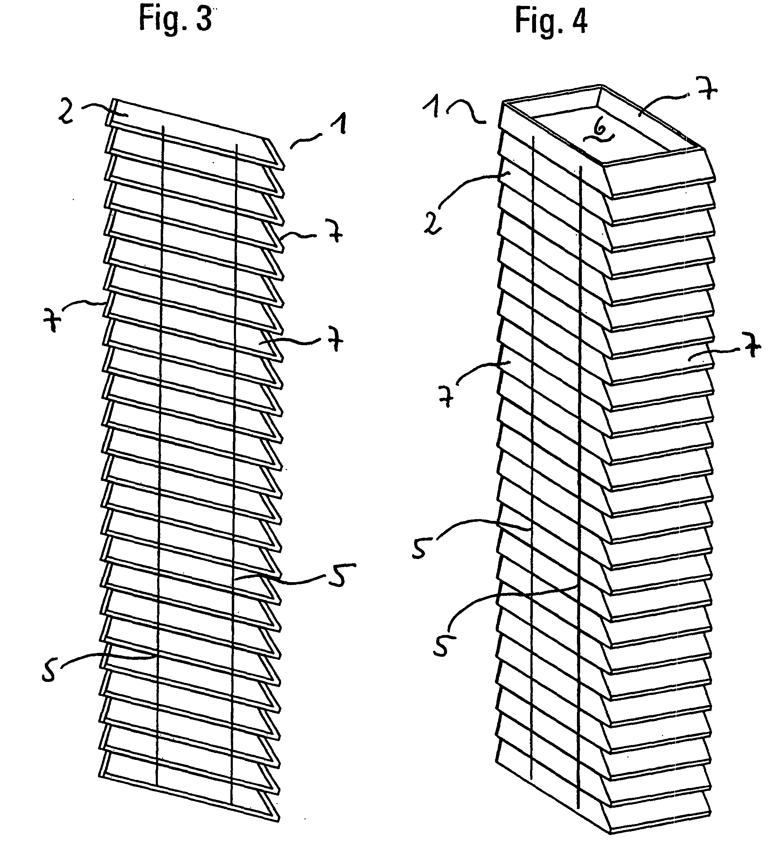

Die Figur 3 zeigt analog zur Figur 1 den Kassettenstapel 1, wobei hier das Klebeband durch eine Schweißnaht 5 ersetzt wurde. Über diese Schweißnaht 5 sind die benachbarten Kassetten 2 jeweils punktförmig miteinander verbunden. In diesem Ausführungsbeispiel sind an einer Seitenfläche 7 der Kassette 2 zwei parallel zueinander angeordnete Schweißnähte 5 vorgesehen. Es kann jedoch auch ausreichen, wenn an den Seitenflächen 7 nur eine Schweißnaht 5 vorgesehen ist, oder wenn an zwei oder drei Seitenflächen 7 jeweils eine Schweißnaht 5 angeordnet ist. Es muss nur sichergestellt sein, dass der Kassettenstapel 1 sicher transportiert werden kann und sich die einzelnen Kassetten 2 wieder voreinander lösen lassen.

Die Figur 4 zeigt eine Perspektive des Kassettenstapels 1 mit den beiden Schweißnähten 5.

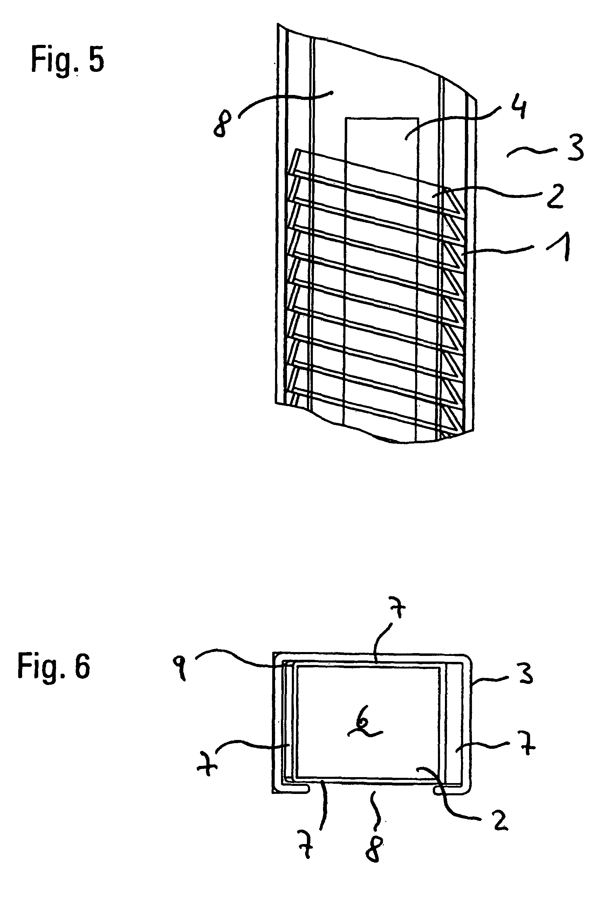

In der Figur 5 ist eine Seitenansicht eines Stapelmagazins 3 mit einem in der Seitenwand vorgesehenen Schlitz 8 dargestellt. In das Stapelmagazin 3 ist ein Kassettenstapel 1 unter einem Winkel von ca. 15° eingebracht. Durch diesen Winkel stehen die einzelnen Kassetten 2 schräg zum Boden und sind übereinander versetzt angeordnet. Dies hat den Vorteil, dass sich die einzelnen Ecken der Kassetten 2 nicht gegeneinander verkanten können und so eine sicheres Nachrutschen der Kassetten 2 gewährleistet ist, wenn die unterste Kassette 2 des Stapels 1 entnommen wird.

Der Kassettenstapel 1 ist hier noch mit dem daran angeordneten Klebeband 4 dargestellt. Dieses kann nach dem Einbringen des Kassettenstapels 1 in das Stapelmagazin 3 abgezogen und über den Schlitz 8 im Stapelmagazin 3 entfernt werden.

Die Figur 6 zeigt eine Aufsicht auf das Stapelmagazin 3, das eine kleinere Grundfläche 9 aufweist als die Grundfläche 6 der Kassette 2. Aus diesem Grund ist gewährleistet, dass die Kassetten 2 immer unter einem Winkel zum Boden innerhalb des Stapelmagazins 3 angeordnet sind.

Die Erfindung ist nicht auf die beschriebenen Ausführungsbeispiele beschränkt, sondern es können beliebige Verbindungskombinationen von Schweißnähten und/oder Klebestreifen an den Seitenflächen der Kassetten vorgesehen werden.

### Bezugszeichenliste

- 1 -: Kassettenstapel
- 2 -: Kunststoff-Kassetten
- 3 -: Stapelmagazin
- 4 -: Klebeband
- 5 -: Schweißnaht
- 6 -: Grundfläche von 2
- 7 -: Seitenfläche von 2
- 8 -: Schlitz in 3
- 9 -: Grundfläche von 3

## Patentansprüche

1. Kassettenstapel (1) aus einzelnen, lösbar miteinander verbundenen Kunststoff-Kassetten (2), die zum Bearbeiten von histologischen Präparaten für eine nachfolgende Schnittpräparation vorgesehen sind, wobei der Kassettenstapel (1) in ein Stapelmagazin (3) eines Drucksystems einbringbar ist, **dadurch gekennzeichnet, dass** die einzelnen Kassetten (2) entweder über mindestens ein Klebeband (4) und/oder über mindestens eine Schweißnaht (5) miteinander verbunden sind.

2. Kassettenstapel (1) nach Anspruch 1, **dadurch gekennzeichnet, dass** die Kassetten (2) eine vorzugsweise rechteckig ausgebildete Grundfläche (6) mit umlaufenden, angeformten Seitenflächen (7) aufweisen und die übereinander angeordneten Kassetten (2) in Längsrichtung gegeneinander verschoben angeordnet sind.

3. Kassettenstapel (1) nach Anspruch 1 oder 2, **dadurch gekennzeichnet, dass** die Kassetten (2) im Kassettenstapel (1) unter einem Winkel von mindestens 20° zueinander angeordnet sind.

4. Kassettenstapel (1) nach Anspruch 1, **dadurch gekennzeichnet, dass** mindestens ein Klebeband (4) an mindestens einer der Seitenflächen (7) angeordnet ist und rückstandsfrei von der Kassette (2) abziehbar ausgebildet ist.

5. Kassettenstapel (1) nach Anspruch 1 bis 3, **dadurch gekennzeichnet, dass** das Klebeband (4) durchtrennbar und/oder teilweise vom Kassettenstapel (1) abziehbar ausgebildet ist.

6. Kassettenstapel (1) nach Anspruch 1, **dadurch gekennzeichnet, dass** die Schweißnaht mit einem beheizten Draht herstellbar ist.

7. Kassettenstapel (1) nach mindestens einem der vorherigen Ansprüche, **dadurch gekennzeichnet, dass** das Stapelmagazin (3) des Drucksystems an mindestens einer Seite einen Schlitz (8) zum Abziehen des Klebebandes (4) vom Kassettenstapel (1) aufweist.

8. Kassettenstapel (1) nach Anspruch 7, **dadurch gekennzeichnet, dass** die Grundfläche (9) des Stapelmagazins (3) kleiner als die Grundfläche (6) der Kassette (2) ausgebildet ist.

9. Kassettenstapel (1) nach Anspruch 8, **dadurch gekennzeichnet, dass** der Kassettenstapel (1) schräg in das Stapelmagazin (3) einführbar ausgebildet ist.

10. Kassettenstapel (1) mindestens einem der vorherigen Ansprüche, **dadurch gekennzeichnet, dass** die Kassetten (2) im Stapelmagazin (3) unter einem Winkel von mindestens 15° angeordnet sind.

## Claims

1. Cassette stack (1) made up of individual plastic cassettes (2) which are connected releasably to one another and are provided for the processing of histological preparations for subsequent section preparation, the cassette stack (1) being insertable into a stack magazine (3) of a printing system, **characterized in that** the individual cassettes (2) are connected to one another either by at least one adhesive tape (4) and/or by at least one weld seam (5).

2. Cassette stack (1) according to Claim 1, **characterized in that** the cassettes (2) have a preferably rectangularly configured bottom surface (6) with integrally formed peripheral side surfaces (7), and the cassettes (2) arranged one above the other are arranged offset with respect to one another in the longitudinal direction.

3. Cassette stack (1) according to Claim 1 or 2, **characterized in that** the cassettes (2) in the cassette stack (1) are arranged at an angle of at least 20° with respect to one another.

4. Cassette stack (1) according to Claim 1, **characterized in that** at least one adhesive tape (4) is arranged on at least one of the side surfaces (7) and is designed so it can be removed from the cassette (2) without leaving a residue.

5. Cassette stack (1) according to Claims 1 to 3, **characterized in that** the adhesive tape (4) is designed so that it can be severed and/or partially removed from the cassette stack (1).

6. Cassette stack (1) according to Claim 1, **characterized in that** the weld seam can be produced with a heated wire.

7. Cassette stack (1) according to at least one of the preceding claims, **characterized in that** the stack magazine (3) of the printing system has, on at least one side, a slit (8) for removal of the adhesive tape (4) from the cassette stack (1).

8. Cassette stack (1) according to Claim 7, **characterized in that** the bottom surface (9) of the stack magazine (3) is smaller than the bottom surface (6) of the cassette (2).

9. Cassette stack (1) according to Claim 8, **characterized in that** the cassette stack (1) is designed so that it can be inserted obliquely into the stack magazine (3).

10. Cassette stack (1) according to at least one of the preceding claims, **characterized in that** the cassettes (2) in the stack magazine (3) are arranged at an angle of at least 15°.

## Revendications

1. Pile de cassettes (1) constituée de cassettes (2) individuelles en matière plastique reliées entre elles de façon détachable, destinées au traitement de préparations histologiques pour une coupe ultérieure, la pile de cassettes (1) pouvant être insérée dans un magasin à piles (3) d'un système sous pression, **caractérisée en ce que** les cassettes individuelles (2) sont reliées entre elles par au moins un ruban adhésif (4) et / ou par au moins une soudure (5).

2. Pile de cassettes (1) selon la revendication 1, **caractérisée en ce que** les cassettes (2) présentent une surface de base (6) de préférence rectangulaire avec des surfaces latérales (7) périphériques formées par moulage et **en ce que** les cassettes (2) disposées les unes sur les autres sont poussées les unes contre les autres dans le sens longitudinal.

3. Pile de cassettes (1) selon la revendication 1 ou 2, **caractérisée en ce que** les cassettes (2) sont disposées dans la pile de cassettes (1) sous un angle d'au moins 20° les unes par rapport aux autres.

4. Pile de cassettes (1) selon la revendication 1, **caractérisée en ce qu'**au moins un ruban adhésif (4) est disposé sur au moins l'une des surfaces latérales (7) et conçu de façon à pouvoir être retiré sans résidu de la cassette (2).

5. Pile de cassettes (1) selon l'une des revendications 1 à 3, **caractérisée en ce que** le ruban adhésif (4) est conçu de façon sécable et/ou de manière à pouvoir être retiré partiellement de la pile de cassettes (1).

6. Pile de cassettes (1) selon la revendication 1, **caractérisée en ce que** la soudure peut être fabriquée avec un fil métallique chauffé.

7. Pile de cassettes (1) selon au moins l'une des revendications précédentes, **caractérisée en ce que** le magasin à piles (3) du système sous pression est muni au moins d'un côté d'une fente (8) pour retirer le ruban adhésif (4) de la pile de cassettes (1).

8. Pile de cassettes (1) selon la revendication 7, **caractérisée en ce que** la surface de base (9) du magasin à piles (3) est plus petite que la surface de base (6) de la cassette (2).

9. Pile de cassettes (1) selon la revendication 8, **caractérisée en ce que** la pile de cassettes (1) est conçue de façon à pouvoir être insérée en biais dans le magasin à piles (3).

10. Pile de cassettes (1) selon au moins l'une des revendications précédentes, **caractérisée en ce que** les cassettes (2) sont disposées dans le magasin à piles (3) sous un angle d'au moins 15°.
